# EUROPEAN PATENT APPLICATION

(11) **EP 1 417 886 A1**
(43) Date of publication of application: **12.05.2004**
(21) Application number: 02405955.2
(22) Date of filing: 06.11.2002
(51) Int. Cl.: A01N 31/16, A01N 31/12, A01N 31/08

(54) **Substituted phenols as useful repellents for insects**

(71) Applicant: Ciba Specialty Chemicals Holding Inc., 4057 Basel (CH)
(72) Inventor: Herbst, Heinz, 79541 Lörrach (DE); Ergenc Nadi, 4106 Therwil (CH)

(57) **Abstract**

The instant invention pertains to the use of substituted phenols as repellents for insects. The compounds may be applied in cosmetic formulations directly to the skin of humans or animals, they are, however also useful when applied to plastic materials such as polymer films or fibers, for example in clothings or tents. They may be even applied to clothes in a later stage, for example during washing or rinsing. A further aspect is a process for the manufacture of insect repellent substrates and surfaces.

## Description

The instant invention pertains to the use of substituted phenols as repellents for insects. The compounds may be applied in cosmetic formulations directly to the skin of humans or animals, they are, however also useful when applied to plastic materials such as polymer films or fibers, for example in clothings or tents. They may be even applied to clothes in a later stage, for example during washing or rinsing. A further aspect is a process for the manufacture of insect repellent substrates and surfaces.

In many regions of the world dangerous diseases, such as malaria, yellow fever, borreliosis (Lyme Disease) or tick-born encephalitis are transmitted by mosquitos, flies, ticks and other insects.

In Europe and the United States of America mosquitos rarely transmit diseases, however in these regions malaria and yellow fever can develop, because tourists and business travellers contract infections during their trips to other parts of the world, in particular Asia and Africa. Additionally in Europe and North America, infections resulting from tick bites are becoming more and more prevalent.

The risk of being infected by a life threatening disease is not the only reason to protect ourselves against insects. Mosquitos or flies can turn every outdoor activity, such as a sports event, a fishing tour, a camping- trip or a barbecue into a real nightmare.

Attempts to control or even eradicate insects worldwide have been largely unsuccessful and probably ecologically unsound in most cases. Other methods such as drug prophylaxis and vaccination can reduce the risk of getting insect transmitted diseases, but they are costly, specific to one insect species, and last but not least they protect only against the disease but not against the insect bites. Repellents overcome these limitations. They provide effective, convenient and safe protection against insect bites during outdoor activities.

Repellents are known in the art and widely used in sprays or aerosols for application on the human skin. Typical repellents are for example derived from natural oils, such as aniseed oil or thyme oil or they are men made chemicals, such as N, N-diethyl-m-toluamide (DEET) or 1-piperidinecarboxylic acid 2-(2-hydroxyethyl)-1-methylester.

Although the products are mostly compatible with ingredients used in cosmetic applications, there is still a problem with their incorporation into plastic materials such as fibers or films.

It has been surprisingly found that specific alkylated and/or halogenated phenolic compounds show in addition to their known antimicrobial efficiency a repellent activity against a variety of insects. The compounds of the present invention can easily be incorporated into natural or synthetic polymers and are equally compatible with components of cosmetic compositions or detergents. They can therefore widely be used in various applications.

One aspect of the invention is the use of a compound according to formula I, II or III as repellent for insects 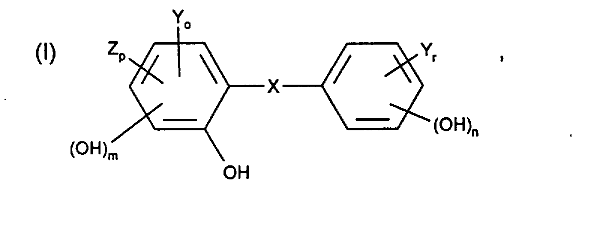 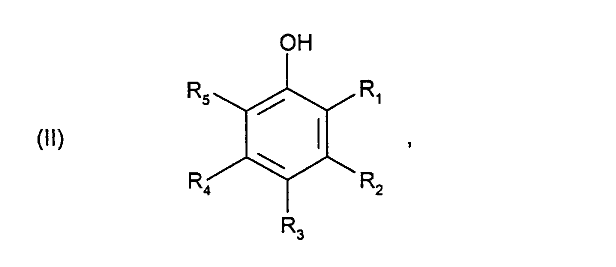 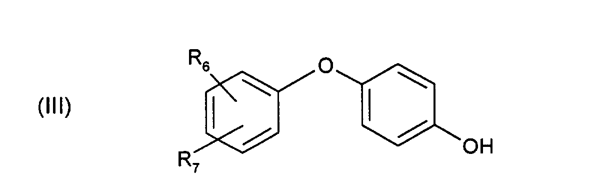 wherein
- X: is oxygen, sulfur or -CH₂-,
- Y: is chloro or bromo,
- Z: is SO₂H, NO₂ or C₁-C₄-Alkyl,
- r: is 0 to 3,
- o: is 0 to 3,
- p: is 0 or 1,
- m: is 0 or 1 and
- n: is 0 or 1;
and at least one of r or o is # 0;
- R₁: is hydrogen, hydroxy, C₁-C₄alkyl, chloro, nitro, phenyl or benzyl,
- R₂: is hydrogen, hydroxy, C₁-C₆alkyl or halogen,
- R₃: is hydrogen, C₁-C₆alkyl, C(O)O-C₁-C₁₈alkyl, hydroxy, chloro, nitro or a sulfo group in the form of the alkali metal salts or ammonium salts thereof,
- R₄: is hydrogen or methyl,
- R₅: is hydrogen or nitro and
- R₆ and R₇: are indpendently C₁-C₁₈alkyl.

Alkyl having up to 18 carbon atoms is a branched or unbranched radical, for example methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl or octadecyl.

The compounds of the present invention are known as antimicrobials and are, by the majority, items of commerce.

Preferably the compound of formula (I), (II) or (III) is
a) 2,4,4'-Trichloro-2'-hydroxydiphenyl ether,
b) 4,4'-Dichloro-2'-hydroxydiphenyl ether,
c) p-hydroxy-benzoicacid-(C₁-C₈)alkylester
d) 2,2'-methylene-bis(4-chlorophenol) or
e) 4-(2-t-butyl-5-methylphenoxyl)-phenol.

p-Hydroxy-benzoicacid-(C₁-C₈)alkylester means methyl, ethyl, propyl, butyl, pentyl, hexyl, heptyl or octyl ester or mixtures thereof.

Most preferred is 2,4,4'-Trichloro-2'-hydroxydiphenyl ether.

As already mentioned the compounds of formula (I), (II) or (III) may be used in a variety of applications.

For example the compounds of formula (I), (II) or (III) are incorporated a) into a substrate or b) into a carrier material, which is applied to a substrate or surface protecting the substrate or surface from attack by insects.

For instance the substrate is a natural or synthetic polymer and the carrier is a cosmetic formulation, a formulation for textile finishing, dyeing or printing or a detergent or rinse.

In particular the natural polymer is cotton, wool or silk and the synthetic polymer is a thermoplastic polymer, a thermosetting coating or a thermoplastic coating.

Preferably the termoplastic polymer is a polyolefin, a polyester, a polyamide, a polyacrylate or a polyurethane.

For example the natural or synthetic polymer is in the form of a molded article, film, fiber or fabric.

Examples of natural and synthetic polymers are given below.
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, Vlb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups la, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propyleneldiene terpolymer; and block copolymers of styrene such as styrene/butadiene/styrene, styrene/isoprene/styrene, styrene/ethylene/butylene/styrene or styrene/ethylene/propylene/styrene.
6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
6c. Hydrogenated aromatic polymers derived from hydrogenation of polymers mentioned under 6a.).
   Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polyketones.
21. Polysulfones, polyether sulfones and polyether ketones.
22. Crosslinked polymers derived from aldehydes on the one hand and phenols, ureas and melamines on the other hand, such as phenol/formaldehyde resins, urea/formaldehyde resins and melamine/formaldehyde resins.
23. Drying and non-drying alkyd resins.
24. Unsaturated polyester resins derived from copolyesters of saturated and unsaturated dicarboxylic acids with polyhydric alcohols and vinyl compounds as crosslinking agents, and also halogen-containing modifications thereof of low flammability.
25. Crosslinkable acrylic resins derived from substituted acrylates, for example epoxy acrylates, urethane acrylates or polyester acrylates.
26. Alkyd resins, polyester resins and acrylate resins crosslinked with melamine resins, urea resins, isocyanates, isocyanurates, polyisocyanates or epoxy resins.
27. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
28. Natural polymers such as wool, silk, cellulose, linen, jute, hemp, rubber, gelatin and chemically modified homologous derivatives thereof, for example cellulose acetates, cellulose propionates and cellulose butyrates, or the cellulose ethers such as methyl cellulose; as well as rosins and their derivatives.
29. Blends of the aforementioned polymers (polyblends), for example PP/EPDM, Polyamide/EPDM or ABS, PVC/EVA, PVC/ABS, PVC/MBS. PC/ABS. PBTP/ABS. PC/ASA, PC/PBT. PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE. PA/PP, PA/PPO. PBT/PC/ABS or PBT/PET/PC.

The insect repellent compounds and optional further components may be added for example to a thermoplastic polymer material. This may be done individually or mixed with one another. If desired, the individual components can be mixed with one another before incorporation into the polymer for example by dry blending, compaction or in the melt.

The incorporation of the insect repellent compounds and optional further components into the polymer is carried out by known methods such as dry blending in the form of a powder, or wet mixing in the form of solutions, dispersions or suspensions for example in an inert solvent, water or oil. The insect repellent compounds and optional further additives may be incorporated, for example, before or after molding or also by applying the dissolved or dispersed additive or additive mixture to the polymer material, with or without subsequent evaporation of the solvent or the suspension/dispersion agent. They may be added directly into the processing apparatus (e.g. extruders, internal mixers, etc), e.g. as a dry mixture or powder or as solution or dispersion or suspension or melt.

The insect repellent compounds and optional further components may be added for example to a solution of the polymer material e.g. prior to spinning (wet spinning, dry spinning) the polymer material.

The insect repellent compounds and optional further components may be added for example to the monomers of the polymer material prior to polymerization (e.g. PUR)

The incorporation can be carried out in any heatable container equipped with a stirrer, e.g. in a closed apparatus such as a kneader, mixer or stirred vessel. The incorporation is preferably carried out in an extruder or in a kneader. It is immaterial whether processing takes place in an inert atmosphere or in the presence of oxygen.

The addition of the additive or additive blend to the polymer can be carried out in all customary mixing machines in which the polymer is melted and mixed with the additives. Suitable machines are known to those skilled in the art. They are predominantly mixers, kneaders and extruders.

The addition is preferably carried out in an extruder by introducing the additive during processing.

Particularly preferred processing machines are single-screw extruders, contrarotating and corotating twin-screw extruders, planetary-gear extruders, ring extruders or cokneaders. It is also possible to use processing machines provided with at least one gas removal compartment to which a vacuum can be applied.

Suitable extruders and kneaders are described, for example, in *Handbuch der Kunststoffextrusion, Vol. 1 Grundlagen, Editors F. Hensen, W. Knappe, H. Potente,* 1989, *pp. 3-7, ISBN:3-446-14339-4 (Vol. 2 Extrusionsanlagen* 1986, *ISBN 3-446-14329-7).*

For example, the screw length is 1 - 60 screw diameters, preferably 35-48 screw diameters. The rotational speed of the screw is preferably 10 - 600 rotations per minute (rpm), very particularly preferably 25 - 300 rpm.

The maximum throughput is dependent on the screw diameter, the rotational speed and the driving force.

If a plurality of components are added, these can be premixed or added individually.

The insect repellent compounds and optional further additives can also be sprayed onto the polymer material. They are able to dilute other additives (for example the conventional additives indicated below) or their melts so that they can be sprayed also together with these additives onto the material. Addition by spraying during the deactivation of the polymerization catalysts is particularly advantageous; in this case, the steam evolved may be used for deactivation of the catalyst. In the case of spherically polymerized polyolefins it may, for example, be advantageous to apply the additives of the invention, optionally together with other additives, by spraying.

The insect repellent compounds and optional further additives can also be added to the polymer in the form of a masterbatch ("concentrate") which contains the components in a concentration of, for example, about 1 % to about 40% and preferably 2 % to about 30 % by weight incorporated in a polymer. The polymer must not be necessarily of identical structure as the polymer where the additives are added finally. In such operations, the polymer can be used in the form of powder, granules, solutions, suspensions or in the form of latices.

Incorporation can take place prior to or during the shaping operation, or by applying the dissolved or dispersed compound to the polymer, with or without subsequent evaporation of the solvent. In the case of elastomers, these can also be stabilized as latices. A further possibility for incorporating the insect repellent compounds of the invention into polymers is to add them before, during or directly after the polymerization of the corresponding monomers or prior to crosslinking. In this context the insect repellent compounds can be added as they are or else in encapsulated form (for example in waxes, oils or polymers).

The materials containing the insect repellent compounds described herein can be used for the production of moldings, rotomolded articles, injection molded articles, blow molded articles, films, tapes, mono-filaments, fibers, nonwovens, profiles, adhesives or putties, surface coatings and the like.

Typically further additives which may additionally be used are given below.
1. Antioxidants
   1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclo hexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.
   1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
   1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
   1.4. Tocopherols, for example α-tocopherol, β-tocopherol, γ-tocopherol, δ-tocopherol and mixtures thereof (vitamin E).
   1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.
   1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonyl phenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methyl phenyl) butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra(5-tert-butyl-4-hydroxy-2-methylphenyl)pentane.
   1.7. O-, N- and S-benzyl compounds, for example 3,5,3,5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
   1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, didodecylmercaptoethyl-2,2-bis(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
   1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)iso-cyanurate.
   1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
   1.12. Acylaminophenols, for example 4-hydroxylauranilide, 4-hydroxystearanilide, octyl N-(3,5-di-tert-butyl-4-hydroxyphenyl)carbamate.
   1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.
   1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard® XL-1, supplied by Uniroyal).
   1.18. Ascorbic acid (vitamin C)
   1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octylphenothiazines, N-allylphenothiazine, N,N,N',N'-tetraphenyl-1,4-diaminobut-2-ene, N,N-bis(2,2,6,6-tetramethylpiperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.
2. UV absorbers and light stabilisers
   2.1. 2-(2'-Hydroxyphenyl)benzotriazoles, for example 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 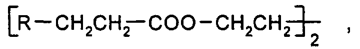 where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)phenyl]-benzotriazole; 2-[2'-hydroxy-3'-(1,1,3,3-tetramethylbutyl)-5'-(α,α-dimethylbenzyl)phenyl]benzotriazole.
   2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
   2.3. Esters of substituted and unsubstituted benzoic acids, for example 4-tert-butylphenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4=hydroxybenzoate, 2-methyl-4,6-di-tert-butylphenyl 3,5-di-tert-butyl-4-hydroxybenzoate.
   2.4: Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-β-cyanovinyl)-2-methylindoline.
   2.5. Nickel compounds, for example nickel complexes of 2,2'-thiobis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.
   2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic. acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-a-olefin copolymer with 2,2,6,6-tetramethyl-4-aminopiperidine or 1,2,2,6,6-pentamethyl-4-aminopiperidine.
   2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanifide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
   2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine.
3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-dicumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.
   The following phosphites are especially preferred:
   Tris(2,4-di-tert-butylphenyl) phosphite (Irgafos® 168, Ciba-Geigy), tris(nonylphenyl) phosphite, 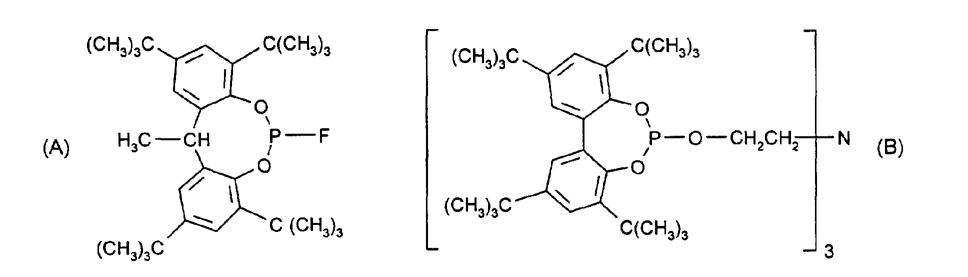 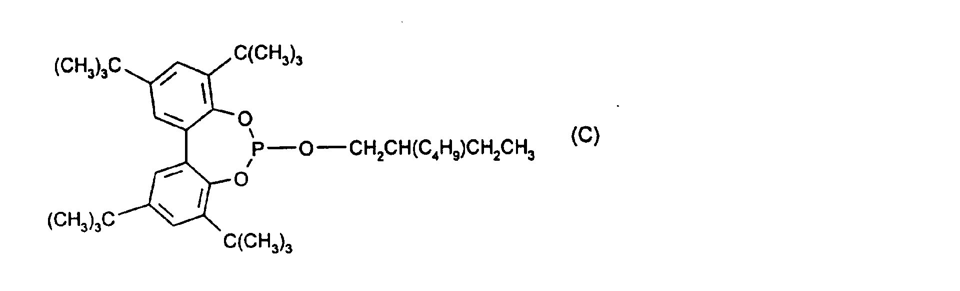 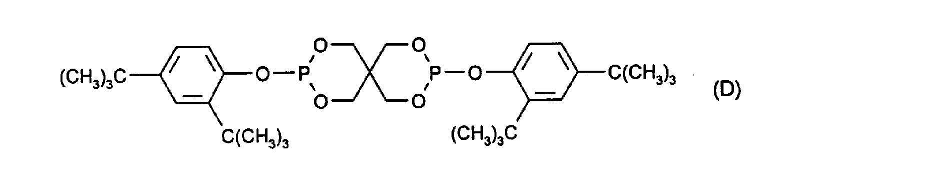 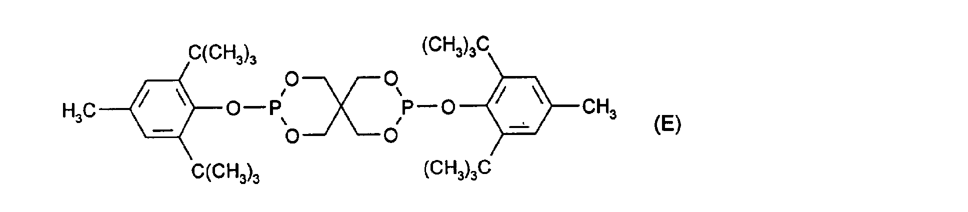 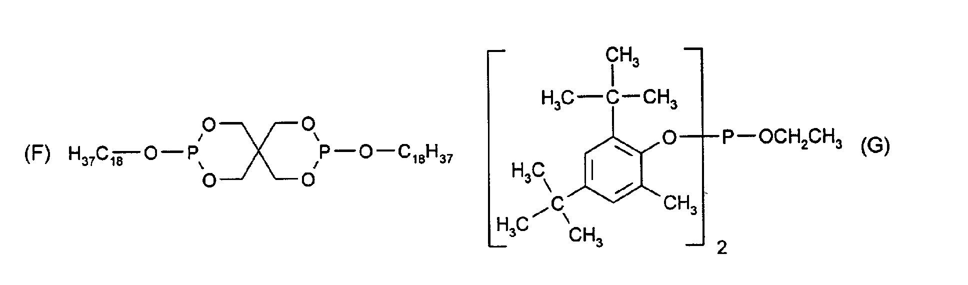
5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N, N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example N-benzyl-alpha-phenylnitrone, N-ethyl-alpha-methylnitrone, N-octylalpha-heptylnitrone, N-lauryl-alpha-undecylnitrone, N-tetradecyl-alpha-tridecylnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.
7. Thiosynergists, for example dilauryl thiodipropionate or distearyl thiodipropionate.
8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Polyamide stabilisers, for example copper salts in combination with iodides and/or phosphorus compounds and salts of divalent manganese.
10. Basic co-stabilisers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.
11. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyldibenzylidene)sorbitol, and 1,3:2,4-di(benzylidene)sorbitol.
12. Fillers and reinforcing agents, for example calcium carbonate, silicates, glass fibers, glass bulbs, asbestos, talc, kaolin, mica, barium sulfate, metal oxides and hydroxides, carbon black, graphite, wood flour and flours or fibers of other natural products, synthetic fibers.
12a. Biocides, for example fungicides such as thiabendazole, tebuconazole, tolnaftate, 10.10'-oxybisphenoxyarsin, isothiazolinone's such as 4.5-dichlor-2-n-octyl-4-isothiazolin-3-on, N-butyl-benzisothiazoline, zink-2-pyridinthiol-1-oxide, algicides such as 2-methylthio-4-cyclopropylamino-6-(α, β-dimethylpropylamino )-s-triazin, 2-methylthio-4-cyclopropylamino-6-tert.butylamino-s-triazin and 2-methylthio-4-ethylamino-6-(α, β-dimethylpropylamino )-s-triazin, and bacteriocides such as silver, silver coated particles, silver compounds such as Ag₂O, AgCl, AgNO₃, Ag₂SO₄, silver-zeolites, silber-glass compounds, silver-zirkonate, and zink-oxid.
13. Other additives, for example plasticisers, lubricants, emulsifiers, pigments, rheology additives, catalysts, flow-control agents, optical brighteners, flameproofing agents, antistatic agents and blowing agents.
14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 or EP-A-0591102 or 3-[4-(2-acetoxyethoxy)-phenyl]-5,7-di-tert-butylbenzofuran-2-one, 5,7-di-tert-butyl-3-[4-(2-stearoyloxyethoxy)phenyl]-benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one.

Likewise of particular interest is the use of the insect repellent compounds for thermoplastic or thermosetting coatings.

Substrates to be coated include wood, ceramic materials, metals, plastics, or articles coated or stained with organic materials.

The binder can in principle be any binder which is customary in industry, for example those described in Ullmann's Encyclopedia of Industrial Chemistry, 5th Edition, Vol. A18, pp. 368-426, VCH, Weinheim 1991. In general, it is a film-forming binder based on a thermoplastic or thermosetting resin, predominantly on a thermosetting resin. Examples thereof are alkyd, acrylic, polyester, phenolic, melamine, epoxy and polyurethane resins and mixtures thereof.

The binder can be a cold-curable or hot-curable binder; the addition of a curing catalyst may be advantageous. Suitable catalysts which accelerate curing of the binder are described, for example, in Ullmann's Encyclopedia of Industrial Chemistry, Vol. A18, p.469, VCH Verlagsgesellschaft, Weinheim 1991.

Preference is given to coating compositions in which the binder comprises a functional acrylate resin and a crosslinking agent.

Examples of coating compositions containing specific binders are:
1. paints based on cold- or hot-crosslinkable alkyd, acrylate, polyester, epoxy or melamine resins or mixtures of such resins, if desired with addition of a curing catalyst;
2. two-component polyurethane paints based on hydroxyl-containing acrylate, polyester or polyether resins and aliphatic or aromatic isocyanates, isocyanurates or polyisocyanates;
3. two-component polyurethane paints based on,thiol-containing acrylate, polyester or polyether resins and aliphatic or aromatic isocyanates, isocyanurates or polyisocyanates;
4. one-component polyurethane paints based on blocked isocyanates, isocyanurates or polyisocyanates which are deblocked during baking, if desired with addition of a melamine resin;
5. one-component polyurethane paints based on aliphatic or aromatic urethanes or polyurethanes and hydroxyl-containing acrylate, polyester or polyether resins;
6. one-component polyurethane paints based on aliphatic or aromatic urethaneacrylates or polyurethaneacrylates having free amino groups within the urethane structure and melamine resins or polyether resins, if necessary with curing catalyst;
7. two-component paints based on (poly)ketimines and aliphatic or aromatic isocyanates, isocyanurates or polyisocyanates;
8. two-component paints based on (poly)ketimines and an unsaturated acrylate resin or a polyacetoacetate resin or a methacrylamidoglycolate methyl ester;
9. two-component paints based on carboxyl- or amino-containing polyacrylates and polyepoxides;
10. two-component paints based on acrylate resins containing anhydride groups and on a polyhydroxy or polyamino component;
11. two-component paints based on acrylate-containing anhydrides and polyepoxides;
12. two-component paints based on (poly)oxazolines and acrylate resins containing anhydride groups, or unsaturated acrylate resins, or aliphatic or aromatic isocyanates, isocyanurates or polyisocyanates;
13. two-component paints based on unsaturated polyacrylates and polymalonates;
14. thermoplastic polyacrylate paints based on thermoplastic acrylate resins or externally crosslinking acrylate resins in combination with etherified melamine resins;
15. paint systems based on siloxane-modified or fluorine-modified acrylate resins;
16. paint systems , especially for clearcoats, based on malonate- blocked isocyanates with melamine resins (e.g. hexamethoxymethylmelamine) as crosslinker (acid catalyzed);
17. UV-curable systems based on oligomeric urethane acrylates and/or acrylatacrylaten, if desired in combination with other oligomers or monomers;
18. dual cure systems, which are cured first by heat and subsequently by UV or electron irradiation, or vice versa, and whose components contain ethylenic double bonds capable to react on irradiation with UV light in presence of a photoinitiator or with an electron beam.

Coating systems based on siloxanes are also possible, e.g. systems described in WO 98/56852, WO 98/56853, DE-A-2914427, or DE-A-4338361.

The coating composition can also comprise further components, examples being solvents, pigments, dyes, plasticizers, stabilizers, rheologic or thixotropic agents, drying catalysts and/or levelling agents. Examples of possible components are described in Ullmann's Encyclopedia of Industrial Chemistry, 5th Edition, Vol. A18, pp. 429-471, VCH, Weinheim 1991.

Possible drying catalysts or curing catalysts are, for example, free (organic) acids or bases, or (organic) blocked acids or bases which may be deblocked by thermal treatment or irradiation, organometallic compounds, amines, amino-containing resins and/or phosphines. Examples of organometallic compounds are metal carboxylates, especially those of the metals Pb, Mn, Co, Zn, Zr or Cu, or metal chelates, especially those of the metals Al, Ti , Zr or Hf, or organometallic compounds such as organotin compounds.

Examples of metal carboxylates are the stearates of Pb, Mn or Zn, the octoates of Co, Zn or Cu, the naphthenates of Mn and Co or the corresponding linoleates, resinates or tallates.

Examples of metal chelates are the aluminium, titanium or zirconium chelates of acetylacetone, ethyl acetylacetate, salicylaldehyde, salicylaldoxime, o-hydroxyacetophenone or ethyl trifluoroacetylacetate, and the alkoxides of these metals.

Examples of organotin compounds are dibutyltin oxide, dibutyltin dilaurate or dibutyltin dioctoate.

Examples of amines are, in particular, tertiary amines, for example tributylamine, triethanolamine, N-methyldiethanolamine, N-dimethylethanolamine, N-ethylmorpholine, N-methylmorpholine or diazabicyclooctane (triethylenediamine), diazabicycloundecene, DBN (= 1,5-diazabicyclo[4.3.0]non-5-ene), and salts thereof. Further examples are quaternary ammonium salts, for example trimethylbenzylammonium chloride.

Amino-containing resins are simultaneously binder and curing catalyst. Examples thereof are amino-containing acrylate copolymers.

The curing catalyst used can also be a phosphine, for example triphenylphosphine.

The coating compositions can also be a radiation-curable coating compositions. In this case, the binder essentially comprises monomeric or oligomeric compounds containing ethylenically unsaturated bonds (prepolymers), which after application are cured by actinic radiation, i.e. converted into a crosslinked, high molecular weight form. Where the system is UV-curing, it generally contains at least one photoinitiator as well. Corresponding systems are described in the abovementioned publication Ullmann's Encyclopedia of Industrial Chemistry, 5th Edition, Vol. A18, pages 451-453.

The coating compositions can be applied to any desired substrates, for example to metal, wood, plastic or ceramic materials.

The coating compositions can be applied to the substrates by the customary methods, for example by brushing, spraying, pouring, dipping or electrophoresis; see also Ullmann's Encyclopedia of Industrial Chemistry, 5th Edition, Vol. A18, pp. 491-500.

Depending on the binder system, the coatings can be cured at room temperature or by heating. The coatings are preferably cured at 50 - 150°C, and in the case of powder coatings or coil coatings even at higher temperatures.

The coating compositions can comprise an organic solvent or solvent mixture in which the binder is soluble. The coating composition can otherwise be an aqueous solution or dispersion. The vehicle can also be a mixture of organic solvent and water. The coating composition may be a high-solids paint or can be solvent-free (e.g. a powder coating material). Powder coatings are, for example, those described in Ullmann's Encyclopedia of Industrial Chemistry, 5th Ed., A18, pages 438-444. The powder coating material may also have the form of a powder-slurry (dispersion of the powder preferably in water).

The pigments can be inorganic, organic or metallic pigments.

The coating compositions may also contain further additives, such as for example light stabilizers as mentioned above. In partivular UV-absorbers and sterically hindered amines are advantageously added.

When the insect repellent compounds are used in a carrier for textile finishing, dyeing or printing, auxiliary additives are advantageously used.

The insect repellent compounds compounds of formula (I), (II) or (III) are mostly sparingly water soluble. In an aqueous formulation they may therefore be applied as aqueous formulation in diluted, solubilised, emulsified or dispersed form.

If the compounds are applied in dispersed form they are milled with an appropriate dispersant, conveniently using quartz balls and an impeller, to a particle size of 1-2mm.

Suitable dispersants are:
- acid esters or their salts of alkylene oxide adducts, typically acid esters or their salts of a polyadduct of 4 to 40mol of ethylene oxide with 1 mol of a phenol, or phosphated polyadducts of 6 to 30mol of ethylene oxide with 1 mol of 4-nonylphenol, 1 mol of dinonylphenol or, preferably, with 1 mol of compounds which are prepared by addition of 1 to 3mol of unsubstituted or substituted styrenes to 1 mol of phenol,
- polystyrene sulfonates,
- fatty acid taurides,
- alkylated diphenyl oxide mono- or disulfonates,
- sulfonates of polycarboxylates,
- the polyadducts of 1 to 60 mol of ethylene oxide and/or propylene oxide with fatty amines, fatty acids or fatty alcohols, each containing 8 to 22 carbon atoms in the alkyl chain, with alkylphenols containing 4 to 16 carbon atoms in the alkyl chain, or with trihydric to hexahydric alkanols containing 3 to 6 carbon atoms, which polyadducts are converted into an acid ester with an organic dicarboxylic acid or with an inorganic polybasic acid,
- ligninsulfonates, and, most preferably,
- formaldehyde condensates such as condensates of ligninsulfonates and/or phenol and formaldehyde, condensates of formaldehyde with aromatic sulfonic acids, typically condensates of ditolyl ether sulfonates and formaldehyde, condensates of naphthalenesulfonic acid and/or naphthol- or naphthylaminesulfonic acids with formaldehyde, condensates of phenolsulfonic acids and/or sulfonated dihydroxydiphenylsulfone and phenols or cresols with formaldehyde and/or urea, as well as condensates of diphenyl oxide-disulfonic acid derivatives with formaldehyde.

It is also possible to prepare the compounds of formula (I), (II) or (III) in aqueous form without undergoing milling processes, namely in solubilized form

Suitable solubilizing agents are anionic, nonionic or zwitterionic and amphoteric synthetic, surface-active substances.

Suitable anionic surface-active substances are:
- sulfates, typically fatty alcohol sulfates, which contain 8 to 18 carbon atoms in the alkyl chain, e.g. sulfated lauryl alcohol;
- fatty alcohol ether sulfates, typically the acid esters or the salts thereof of a polyadduct of 2 to 30 mol of ethylene oxide with 1 mol of a C₈- C₂₂fatty alcohol;
- the alkali metal salts, ammonium salts or amine salts of C₈-C₂₀ fatty acids, which are termed soaps, typically coconut fatty acid;
- alkylamide sulfates;
- alkylamine sulfates, typically monoethanolamine lauryl sulfate;
- alkylamide ether sulfates;
- alkylaryl polyether sulfates;
- monoglyceride sulfates;
- alkane sulfonates, containing 8 to 20 carbon atoms in the alkyl chain, e.g. dodecyl sulfonate;
- alkylamide sulfonates;
- alkylaryl sulfonates;
- a-olefin sulfonates;
- sulfosuccinic acid derivatives, typically alkyl sulfosuccinates, alkyl ether sulfosuccinates or alkyl sulfosuccinamide derivatives;
- N-[alkylamidoalkyl]amino acids of formula 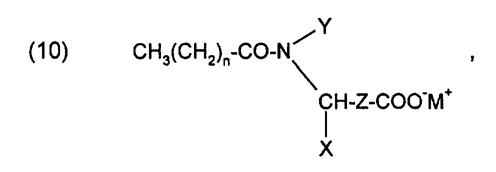 wherein
   - X: is hydrogen, C₁-C₄alkyl or -COO-M⁺,
   - Y: is hydrogen or C₁-C₄alkyl,
   - Z: is: 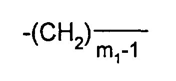
   - m₁: is 1 to 5,
   - n₁: is an integer from 6 to 18, and
   - M: is an alkali metal ion or an amine ion;
- alkyl ether carboxylates and alkylaryl ether carboxylates of formula

   (10) CH₃-X-Y-A ,

   wherein
   - X: is a radical : 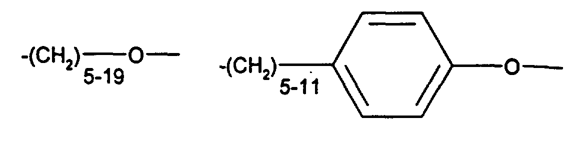 or 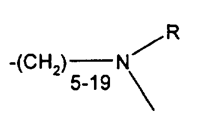
   - R: is hydrogen or C₁-C₄ alkyl,
   - Y: is: 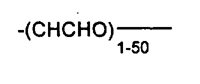
   - A: is: 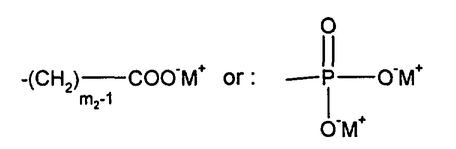
   - m₂: is 1 to 6, and
   - M: is an alkali metal cation or an amine cation.
The anionic surfactants used may furthermore be fatty acid methyl taurides, alkylisothionates, fatty acid polypeptide condensates and fatty alcohol phosphoric acid esters. The alkyl radicals in these compounds preferably contain 8 to 24 carbon atoms.

The anionic surfactants are usually obtained in the form of their water-soluble salts, such as the alkali metal, ammonium or amine salts. Typical examples of such salts are lithium, sodium, potassium, ammonium, triethylamine, ethanolamine, diethanolamine or triethanolamine salts. It is preferred to use the sodium or potassium salts or the ammonium-(NR₁ R₂ R₃ ) salts, wherein R₁, R₂ and R₃ are each independently of one another hydrogen, C₁-C₄alkyl or C₁-C₄hydroxyalkyl.

Very particularly preferred anionic surfactants in the novel formulation are monoethanolamine lauryl sulfate or the alkali metal salts of fatty alcohol sulfates, preferably the sodium lauryl sulfate, sodium laureth-2 sulfate or sodium cumene sulfonate.

Suitable zwitterionic and amphoteric surfactants are imidazoline carboxylates, alkylamphocarboxy carboxylic acids, alkylamphocarboxylic acids (e.g. lauroamphoglycinate) and N-alkyl-β-aminopropionates or N-alkyl-b-iminodipropionates.

Nonionic surfactants are typically derivatives of the adducts of propylene oxide/ethylene oxide having a molecular weight of 1000 to 15000, fatty alcohol ethoxylates (1-50 EO), alkylphenol polyglycol ethers (1-50 EO), ethoxylated carbohydrates, fatty acid glycol partial esters, typically diethylene glycol monostearate, PEG5 - PEG25 glyceryl stearate, for example PEG-5 glyceryl stearate, PEG15 glyceryl stearate or PEG25 glyceryl stearate; cetearyl octanoate; fatty acid alkanolamides and fatty acid dialkanolamides, fatty acid alkanolamide ethoxylates and fatty acid amine oxides.

Furthermore, the salts of saturated and unsaturated C₈-C₂₂ fatty acids may be used as solubilizing agents, either by themselves, in admixture with each other or in admixture with the other surface-active substances cited for component (c). Illustrative examples of these fatty acids are typically capric, lauric, myristic, palmitic, stearic, arachic, behenic, dodecenoic, tetradecenoic, octadecenoic, oleic, eicosanic and erucic acid, as well as the technical mixtures of such acids, typically coconut fatty acid. These acids may be obtained in the form of salts, suitable cations being alkali metal cations such as sodium and potassium cations, metal atoms such as zinc atoms and aluminium atoms or nitrogen-containing organic compounds of sufficient alkalinity, typically amines or ethoxylated amines. These salts can also be prepared in situ.

Furthermore, suitable solubilizing agents in the present composition are dihydric alcohols, preferably those containing 2 to 6 carbon atoms in the alkylene radical, typically ethylene glycol, 1,2- or 1,3-propanediol, 1,3-, 1,4- or 2,3-butanediol, 1,5-pentanediol and 1,6-hexanediol or monohydric alcohol like methanol; ethanol or propanol; and acetone.

Also mixtures of anionic, nonionic, zwitterionic, amphoteric surface-active subatances and one or more of the mono- and/or dihydric alcohols mentioned above can be used for solubilising the compounds.

In a preferred method the aqueous liquor is heated up above the melting point of the compound used in order to support the solubilising or dispersing process.

The aqueous liquor prepared can be diluted to almost any ratio.

Fiber material which can be treated with the insect repellent compounds are materials comprising for example, silk, leather, wool, polyamide, for example nylon (including nylon-6, Nylon-66), or polyurethanes, polyester, polyacrylonitrile polypropylene, polyethylene and cellulose-containing fiber materials of all kinds, for example natural cellulose fibers, such as cotton, linen, jute and hemp, and also viscose staple fiber and regenerated cellulose.

Polyester fiber materials which can be treated with the insect repellent compounds will be understood as including cellulose ester fibers such as cellulose secondary acetate and cellulose triacetate fibers and, preferably, linear polyester fibers which may also be acid-modified, and which are obtained by the condensation of terephthalic acid with ethylene glycol or of isophthalic acid or terephthalic acid with 1,4-bis(hydroxymethyl)cyclohexane, as well as copolymers of terephthalic and isophthalic acid and ethylene glycol. The linear polyester fiber material (PES) hitherto used almost exclusively in the textile industry consists of terephthalic acid and ethylene glycol.

The fiber materials may also be used as blends of natural fibers like cotton, wool or jute with each other or with synthetic fiber materials like PES, Nylon or polypropylene or blends of synthetic fiber materials with each other. Typical fiber blends are of polyacrylonitrilepolyester, polyamide/polyester, polyester/cotton, polyester/viscose and polyester/wool.

The textile fiber material can be in different forms of presentation, preferably as woven or knitted fabrics or as piece goods such as knitgoods, woven fabrics nonwoven textiles, carpets, piece garments also as yarn on cheeses, warp beams and the like or finished goods in any other form, preferably T-shirts, sport wears, running bra, sweaters, coats, lingeries, underwears and socks.

The fibers or fiber blends can be treated batchwise or continuously.

The treatment of the fiber materials is carried out from an aqueous liquor by a continuous or batch process. In batchwise dyeing, the liquor ratio may be chosen from a wide range, typically from 1:4 to 1:100, preferably from 1:5 to 1:50. The treatment temperature is not lower than 50°C and is normally not higher than 140°C. The preferred temperature range is from 80 to 135°C.

The aqueous liquor contains the insect repellent compounds in a concentration which is sufficient to cause the compounds to be exhausted into the fiber. In particular, the concentration of the insect repellent compounds is preferably form 0.005 to 5% b.w., based on the weight of the fiber or fabric material.

In continuous treatment methods, the treatment liquors, which may optionally contain assistants, are applied to yarns, fabric, piece goods, for example, by padding or slop-padding and are developed by thermofixation or HT steaming processes.

Linear polyester fibers and cellulose fibers are preferably treated by the high temperature process in closed and pressure-resistant apparatus at temperatures of >80°C, preferably in the range from 90 to 120°C, and at normal or elevated pressure. Suitable closed apparatus includes typically machines which are also used for dyeing processes, like circulation dyeing machines such as cheese or beam dyeing machines, winch becks, jet or drum dyeing machines, muff dyeing machines, paddles or jiggers.

Cellulose secondary acetate is preferably treated in the temperature range of from 80-85°C. The treatment time is from 5 to 30, preferably 10 to 20 minutes.

The fiber material, which is treated by the present process is characterized by having an essentially homogeneous distribution of the insect repellent compounds throughout the fiber cross-section.

The process may also be carried out together with a dyeing process. Suitable dyes are disperse dyes which are only sparingly soluble in water, metal complex dyes or acid dyes. They are therefore present in the dye liquor substantially in the form of a fine dispersion. They may belong to different dye classes, including acridone, azo, anthraquinone, coumarin, methine, perinone, naphthoquinone-imine, quinophthalone, styryl or nitro dyes. Mixtures of disperse dyes may also be used in the practice of this invention.

When using the insect repellent compounds of this invention in a dyeing process, the procedure can be such that the fiber material is first treated with these compounds and then dyeing is carried out or, preferably, the fiber material is treated simultaneously in the dyebath with the insect repellent compounds and the dye. The application of the insect repellent compounds, however, also be effected subsequently to the previously prepared dyeing by thermofixation.

The treatment liquors may also contain further ingredients such as dyeing assistants, dispersants, carriers, wool protectives, and wetting agents as well as antifoams.

The treatment liquors may also contain mineral acids, typically sulphuric acid or phosphoric acid, or conveniently organic acids, typically including aliphatic carboxylic acids such as formic acid, acetic acid, oxalic acid or citric acid and/or salts such as ammonium acetate, ammonium sulfate or sodium acetate. The acids are used in particular to adjust the pH of the liquors used in the practice of this invention to 4-5.

The fiber material is first run into the bath which contains the insect repellent compounds, preferably the dye, and any further auxiliaries, and which has been adjusted to pH 4.5-5.5 at 20-80°C, then the temperature is raised to 80-125°C over 20 to 40 minutes, and further treatment is carried out for 10 to 100 minutes, preferably for 20-80 minutes preferably in the temperature range of 80 to 125°C.
The samples are finished by cooling the treatment liquor to 50-80°C, optionally washing off the dyeings with water and, if necessary, reductively clearing them in conventional manner in alkaline medium. The treated samples are then again washed off and dried. When using vat dyes for dyeing the cellulose component, the goods are first treated with hydrosulfite at pH 6-12.5, then treated with an oxidizing agent and finally washed off.

The process of this invention makes it possible to obtain with insect repellent compounds finished textile materials having long lasting efficacy.

It is also possible to incorporate the insect repellent compounds of the present invention in nonwovens.

"Non-woven" is a type of fabric that is not spun and woven into a cloth, but instead bonded together. According to the ISO definition it is a manufactured sheet, web, or batt of directionally or randomly orientated fibers, bonded by friction, and/or adhesion.

Nonwoven textiles are widely used in disposable as well as durable goods, such as baby diaper, feminine hygiene, adult incontinence, wipers, bed linings, automotive industries, medical face masks, air and water filtration, home furnishing and geotextiles. Such materials can be fabricated by different techniques, such as spunbonding, melt blown, carded thermal bonding and carded chemical bonding, dry and/or wet laid and needlefelts. Because of the nature of such applications the market is increasingly demanding products with specific properties such as for example antimicrobial efficacy or insect repellent activity.

Amongst various nonwoven products, materials made by spunbonding and melt blown techniques have some unique properties and are becoming more and more important because of advantages in manufacturing as well as in product properties. Spunbond nonwovens can be made directly from thermoplastic polymers such as polypropylene, polyethylene, polyester and nylon. This process offers lower manufacturing cost, improved processability and performance in the final product such as coverstock for disposable baby diapers, feminine hygiene and adult incontinence. Spunbond nonwovens can also be used as durable products such as geotextiles and roof membranes. Characterised by a large surface area and small pore size, melt blown nonwovens differ from traditional spunbonds in their lower fiber denier and fineness. But similarly, melt blown nonwovens are also manufactured by directly extruding thermoplastic polymers, especially high melt flow polypropylene. Their applications include filtration, feminine hygiene, wipers, face masks and absorbents.

The nonwovens used are preferably prepared by spun bond and melt blown processes or by carded chemical bonding, carded thermal bonding, dry and/or wet laid and needlefelts.

The insect repellent compounds may also be used as one component in a detergent or rinse. Examples for such applications are given below.

The detergent compositions used preferably comprise
i) 1-70% of an anionic surfactant and/or a nonionic surfactant;
ii) 0-75% of a builder;
iii) 0-30% of a peroxide;
iv) 0-10% of a peroxide activator;
v) 0.001-5% of a whitening agent, and
(vi) 0.001-10 % b.w. of a compound of formula (I), (II) or (III);
each by weight, based on the total weight of the detergent.

More preferably the detergent compositions used comprise
i) 5-70% of an anionic surfactant and/or a nonionic surfactant;
ii) 5-70% of a builder;
iii) 0.5-30% of a peroxide;
iv) 0.5-10% of a peroxide activator and/or 0.1-2% of a bleaching catalyst;
v) 0.01-5% of a mixture of compounds of a whitening agent; and
(vi) 0.001-10 % b.w. of a compound of formula (I), (II) or (III);
each by weight, based on the total weight of the detergent.

The detergent may be formulated as a solid, as an aqueous liquid comprising, e.g., 5-50, preferably 10-35% water or as a non-aqueous liquid detergent, containing not more than 5, preferably 0-1 wt.% of water, and based on a suspension of a builder in a non-ionic surfactant, as described, e.g., in GB-A-2158454.

The anionic surfactant component may be, e.g., an alkylbenzenesulfonate, an alkylsulfate, an alkylethersulfate, an olefinsulfonate, an alkanesulfonate, a fatty acid salt, an alkyl or alkenyl ether carboxylate or an α-sulfofatty acid salt or an ester thereof. Preferred are alkylbenzenesulfonates having 10 to 20 carbon atoms in the alkyl group, alkylsulfates having 8 to 18 carbon atoms, alkylethersulfates having 8 to 18 carbon atoms, and fatty acid salts being derived from palm oil or tallow and having 8 to 18 carbon atoms. The average molar number of ethylene oxide added in the alkylethersulfate is preferably 1 to 20, preferably 1 to 10. The salts are preferably derived from an alkaline metal like sodium and potassium, especially sodium. Highly preferred carboxylates are alkali metal sarcosinates of formula R-CO(R¹)CH₂COOM¹ in which R is alkyl or alkenyl having 9-17 carbon atoms in the alkyl or alkenyl radical, R¹ is C₁-C₄ alkyl and M¹ is alkali metal, especially sodium.

The nonionic surfactant component may be, e.g., primary and secondary alcohol ethoxylates, especially the C₈-C₂₀ aliphatic alcohols ethoxylated with an average of from 1 to 20 moles of ethylene oxide per mole of alcohol, and more especially the C₁₀-C₁₅ primary and secondary aliphatic alcohols ethoxylated with an average of from 1 to 10 moles of ethylene oxide per mole of alcohol. Non-ethoxylated nonionic surfactants include alkylpolyglycosides, glycerol monoethers, and polyhydroxyamides (glucamide).

The total amount of anionic surfactant and nonionic surfactant is preferably 5-50% by weight, preferably 5-40% by weight and more preferably 5-30% by weight. As to these surfactants it is preferred that the lower limit is 10% by weight.

The builder component may be an alkali metal phosphate, especially a tripolyphosphate; a carbonate or bicarbonate, especially the sodium salts thereof; a silicate or disilicate; an aluminosilicate; a polycarboxylate; a polycarboxylic acid; an organic phosphonate; or an aminoalkylene poly (alkylene phosphonate); or a mixture of these.

Preferred silicates are crystalline layered sodium silicates of the formula NaHSiₘO_{2m+1.}pH₂O or Na₂SiₘO_{2M+1}.pH₂O in which m is a number from 1.9 to 4 and p is 0 to 20.

Preferred aluminosilicates are the commercially-available synthetic materials designated as Zeolites A, B, X, and HS, or mixtures of these. Zeolite A is preferred.

Preferred polycarboxylates include hydroxypolycarboxylates, in particular citrates, polyacrylates and their copolymers with maleic anhydride.

Preferred polycarboxylic acids include nitrilotriacetic acid and ethylene diamine tetra-acetic acid.

Preferred organic phosphonates or aminoalkylene poly (alkylene phosphonates) are alkali metal ethane 1-hydroxy diphosphonates, nitrilo trimethylene phosphonates, ethylene diamine tetra methylene phosphonates and diethylene triamine penta methylene phosphonates.

The amount of builders is preferably 5-70% by weight, preferably 5-60% by weight and more preferably 10-60% by weight. As to the builders it is preferred that the lower limit is 15% by weight, especially 20% by weight.

Suitable peroxide components include, for example, the organic and inorganic peroxides known in the literature and available commercially that bleach textile materials at conventional washing temperatures, for example at from 5 to 95°C.

In particular, the organic peroxides are, for example, monoperoxides or polyperoxides having alkyl chains of at least 3, preferably 6 to 20, carbon atoms; in particular diperoxydicarboxylates having 6 to 12 C atoms, such as diperoxyperazelates, diperoxypersebacates, diperoxyphthalates and/or diperoxydodecanedioates, especially their corresponding free acids, are of interest. It is preferred, however, to employ very active inorganic peroxides, such as persulphate, perborate and/or percarbonate. It is, of course, also possible to employ mixtures of organic and/or inorganic peroxides.

The amount of peroxide is preferably 0.5-30% by weight, preferably 1-20% by weight and more preferably 1-15% by weight. In case a peroxide is used, the lower limit is preferably 2% by weight, especially 5% by weight.

The peroxides, especially the inorganic peroxides, are preferably activated by the inclusion of a bleach activator. Preferred are such compounds that, under perhydrolysis conditions, yield unsubstituted or substituted perbenzo- and/or peroxo-carboxylic acids having from 1 to 10 carbon atoms, especially from 2 to 4 carbon atoms. Suitable compounds include those that carry O- and/or N-acyl groups having the said number of carbon atoms and/or unsubstituted or substituted benzoyl groups. Preference is given to polyacylated alkylenediamines, especially tetraacetylethylenediamine (TAED), acylated glycolurils, especially tetraacetylglycoluril (TAGU), N,N-diacetyl-N,N-dimethyl-urea (DDU), acylated triazine derivatives, especially 1,5-diacetyl-2,4-dioxohexahydro-1,3,5-triazine (DADHT), compounds of formula 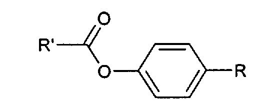 wherein R is a sulfonate group, a carboxylic acid group or a carboxylate group, and wherein R' is linear or branched (C₇-C₁₅)alkyl; also activators that are known under the names SNOBS, SLOBS, NOBS and DOBA, acylated polyhydric alcohols, especially triacetin, ethylene glycol diacetate and 2,5-diacetoxy-2,5-dihydrofuran and acetylated sorbitol and mannitol and acylated sugar derivatives, especially pentaacetylglucose (PAG), sucrose polyacetate (SUPA), pentaacetylfructose, tetraacetylxylose and octaacetyllactose, and acetylated, optionally N-alkylated, glucamine and gluconolactone. The combinations of conventional bleach activators disclosed in German Patent Application DE-A-44 43 177 may also be used. Nitrile compounds that form peroxyimidic acids with peroxides are also suitable as bleach activators. Preferred are tetraacetyl ethylenediamine and nonoyloxybenzene sulfonate.

The amount of bleach activator is preferably 0-10% by weight, preferably 0-8% by weight. In case a bleach activator is used, the lower limit is preferably 0.5% by weight, especially 1% by weight.

Bleaching catalysts which may be added include, e.g., enzymatic peroxide precursors and/or metal complexes. Preferred metal complexes are manganese, cobalt or iron complexes such as manganese or iron phthalocyanines or the complexes described in EP-A-0509787. In case a bleaching catalyst is used the amount is preferably 0.1-2% by weight.

Furthermore, the detergent can optionally contain enzymes. Enzymes can be added to detergents for stain removal. The enzymes usually improve the performance on stains that are either protein- or starch-based, such as those caused by blood, milk, grass or fruit juices. Preferred enzymes are cellulases, proteases, amylases and lipases. Preferred enzymes are cellulases and proteases, especially proteases. Cellulases are enzymes which act on cellulose and its derivatives and hydrolyze them into glucose, cellobiose, cellooligosaccharide. Cellulases remove dirt and have the effect of mitigating the roughness to the touch. Examples of enzymes to be used include, but are by no means limited to, the following:
proteases as given in US-B-6,242,405, column 14, lines 21 to 32;
lipases as given in US-B-6,242,405, column 14, lines 33 to 46;
amylases as given in US-B-6,242,405, column 14, lines 47 to 56; and
cellulases as given in US-B-6,242,405, column 14, lines 57 to 64.

The enzymes can optionally be present in the detergent. When used, the enzymes are usually present in an amount of 0.01-5% by weight, preferably 0.05-5% and more preferably 0.1-4% by weight, based on the total weight of the detergent.

Further preferred additives for the detergents according to the invention are polymers that, during the washing of textiles, inhibit staining caused by dyes in the washing liquor that have been released from the textiles under the washing conditions (dye fixing agents, dye transfer inhibitors). Such polymers are preferably polyvinylpyrrolidones, polyvinylimidazoles or polyvinylpyridine N-oxides which may have been modified by the incorporation of anionic or cationic substituents, especially those having a molecular weight in the range from 5000 to 60 000, more especially from 10 000 to 50 000. Such polymers are usually used in an amount of from 0.01 to 5 %, preferably 0.05 to 5 % by weight, especially 0.1 to 2 % by weight, based on the total weight of the detergent. Preferred polymers are those given in WO-A-02/02865 (see especially page 1, last paragraph and page 2, first paragraph).

The detergents used will usually contain one or more auxiliaries such as soil suspending agents, for example sodium carboxymethylcellulose; salts for adjusting the pH, for example alkali or alkaline earth metal silicates; foam regulators, for example soap; salts for adjusting the spray drying and granulating properties, for example sodium sulphate; perfumes; and also, if appropriate, antistatic and softening agents; such as smectite clays; photobleaching agents; pigments; and/or shading agents. These constituents should, of course, be stable to any bleaching system employed. Such auxiliaries can be present in an amount of, for example, 0.1 to 20% by weight, preferably 0.5 to 10 % by weight, especially 0.5 to 5 % by weight, based on the total weight of the detergent.

The detergent compositions can take a variety of physical forms including powder, granular, tablet and liquid forms. Examples thereof are conventional powder heavy-duty detergents, compact and supercompact heavy-duty detergents and tablets, like heavy-duty detergent tablets. One important physical form is the so-called concentrated granular form adapted to be added to a washing machine.

Of importance are also the so-called compact (or supercompact) detergents. In the field of detergent manufacture, a trend has developed recently towards the production of compact detergents which contain increased amounts of active substance. In order to minimize energy expenditure during the washing process, the compact detergents are required to operate efficiently at temperatures as low as 40°C, or even at room temperatures, e.g. at 25°C. Such detergents usually contain only low amounts of fillers or processing aids, like sodium sulfate or sodium chloride. The amount of such fillers is usually 0-10% by weight, preferably 0-5 % by weight, especially 0-1 % by weight, based on the total weight of the detergent. Such detergents usually have a bulk density of 650-1000 g/l. preferably 700-1000 g/l and especially 750-1000 g/l.

The detergents can also be present in the form of tablets. Relevant characteristics of tablets are ease of dispensing and convenience in handling. Tablets are the most compact delivery of solid detergents and have a bulk density of, for example, 0.9 to 1.3 kg/litre. To enable fast disintegration laundry detergent tablets generally contain special disintegrants:
- Effervescents such as carbonate/hydrogencarbonate/citric acid;
- swelling agents like cellulose, carboxymethyl cellulose, cross-linked poly(N-vinylpyrrollidone);
- quickly dissolving materials such as Na (K) acetate, or Na (K) citrate;
- rapidly dissolving water-soluble rigid coating such as dicarboxy acids.
The tablets can also contain combinations of any of the above disintegrants.

The detergent may also be formulated as a an aqueous liquid comprising 5-50, preferably 10-35% water or as a non-aqueous liquid detergent, containing not more than 5, preferably 0-1 wt.% of water. Non-aqueous liiquid detergent compositions can contain other solvents as carriers. Low molecular weight primary or secondary alcohols exemplified by methanol, ethanol, propanol, and isopropanol are suitable. Monohydric alcohols are preferred for solubilizing surfactant, but polyols such as those containing from 2 to about 6 carbon atoms and from 2 to about 6 hydroxy groups (e.g., 1,3-propanediol, ethylene glycol, glycerine, and 1,2-propanediol) can also be used. The compositions may contain from 5% to 90%, typically 10% to 50% of such carriers. The detergents can also be present as the so-called "unit liquid dose" form.

This detergent treatment of textiles can be conducted as a domestic treatment in normal washing machines.

The textile fibers treated may be natural or synthetic fibers or mixtures thereof. Examples of natural fibers include vegetable fibers such as cotton, viscose, flax, rayon or linen, preferably cotton and animal fibers such as wool, mohair, cashmere, angora and silk, preferably wool. Synthetic fibers include polyester, polyamide and polyacrylonitrile fibers. Preferred textile fibers are cotton, polyamide and wool fibers, especially cotton fibers. Preferably, textile fibers treated according to the method of the present invention have a density of less than 200 g/m².

According to this process usually an amount of 0.01 to 3.0% by weight, especially 0.05 to 3.0% by weight, based on the weight of the textile fiber material is used.

The process is usually conducted in the temperature range of from 5 to 100°C, especially 5 to 60°C. Preferred is a temperature range of 5 to 40°C, especially 5 to 35°C and more preferably 5 to 30°C.

The detergent compositions herein will preferably be formulated such that, during use in aqueous cleaning operations, the wash water will have a pH of between about 6.5 and about 11, preferably between about 7.5 and 11. Laundry products are typically at pH 9-11. Techniques for controlling pH at recommended usage levels include the use of buffers, alkalis, acids, etc., and are well known to those skilled in the art.

Machine laundry methods herein typically comprise treating soiled laundry with an aqueous wash solution in a washing machine having dissolved or dispensed therein an effective amount of a machine laundry detergent composition in accordance with the invention. By an effective amount of the detergent composition it is meant, e.g., from 20 g to 300 g of product dissolved or dispersed in a wash solution of volume from 5 to 85 litres, as are typical product dosages and wash solution volumes commonly employed in conventional machine laundry methods. Examples are
- top-loading, vertical axis U.S.-type automatic washing machines using about 45 to 83 liters of water in the wash bath, a wash cycle of about 10 to about 14 minutes and a wash water temperature of about 10 to about 50°C;
- front-loading, horizontal-axis European-type automatic washing machine using about 8 to 15 liters of water in the wash bath, a wash cycle of about 10 to about 60 minutes and a wash water temperature of about 30 to about 95°C;
- top-loading, vertical-axis Japanese-type automatic washing machine using about 26 to 52 liters of water in the wash bath, a wash cycle of about 8 to about 15 minutes and a wash water temperature of about 5 to about 25°C.

The liquor ratio is preferably 1:4 to 1:40, especially 1:4 to 1:15. Highly preferred is a liquor ratio of 1:4 to 1:10, especially 1:5 to 1:9.

A further possibility is to incorporate the insect repellent compounds into a cosmetic formulation suitable to be applied on the human skin or on animals.

Typical examples for cosmetic compositions are given below.

The cosmetic repellent compositions contain, for example, from 0.1 to 30 % by weight, preferably from 0.1 to 15 % by weight and especially from 0.5 to 10 % by weight, based on the total weight of the composition, of a compound of formula (I), (II) or (III) and at least one cosmetically tolerable adjuvant.

The cosmetic repellent compositions can be prepared by physically mixing the compound of formula (I), (II) or (III) with the adjuvant using customary methods, for example by simply stirring together the individual components.

The cosmetic repellent compositions may be, for example, creams, gels, lotions, alcoholic and aqueous/alcoholic solutions, emulsions, wax/fat compositions, stick preparations, powders or ointments.

As water- and oil-containing emulsions (e.g. W/O, O/W, O/W/O and W/O/W emulsions or microemulsions) the repellent compositions contain, for example,
from 0.1 to 30 % by weight, preferably from 0.1 to 15 % by weight and especially from 0.5 to 10 % by weight, based on the total weight of the composition, of the compound of formula I), (II) or (III),
from 1 to 60 % by weight, especially from 5 to 50 % by weight and preferably from 10 to 35 % by weight, based on the total weight of the composition, of at least one oil component,
from 0 to 30 % by weight, especially from 1 to 30 % by weight and preferably from 4 to 20 % by weight, based on the total weight of the composition, of at least one emulsifier,
from 10 to 90 % by weight, especially from 30 to 90 % by weight, based on the total weight of the composition, of water, and
from 0 to 88.9 % by weight, especially from 1 to 50 % by weight, of further cosmetically tolerable adjuvants.

As oil components of oil-containing compositions (e.g. oils, W/O. O/W. O/W/O and W/O/W emulsions or microemulsions) there come into consideration, for example, Guerbet alcohols based on fatty alcohols having from 6 to 18, preferably from 8 to 10, carbon atoms, esters of linear C₆-C₂₄ fatty acids with linear C₃-C₂₄ alcohols, esters of branched C₆-C₁₃carboxylic acids with linear C₆-C₂₄ fatty alcohols, esters of linear C₆-C₂₄ fatty acids with branched alcohols, especially 2-ethylhexanol, esters of hydroxycarboxylic acids with linear or branched C₆-C₂₂ fatty alcohols, especially dioctyl malates, esters of linear and/or branched fatty acids with polyhydric alcohols (for example propylene glycol, dimer diol or trimer triol) and/or Guerbet alcohols, triglycerides based on C₆-C₁₀ fatty acids, liquid mono-/di-/tri-glyceride mixtures based on C₆-C₁₈ fatty acids, esters of C₆-C₂₄ fatty alcohols and/or Guerbet alcohols with aromatic carboxylic acids, especially benzoic acid, esters of C₂-C₁₂dicarboxylic acids with linear or branched alcohols having from 1 to 22 carbon atoms or polyols having from 2 to 10 carbon atoms and from 2 to 6 hydroxy groups, vegetable oils (such as sunflower oil, olive oil, soybean oil, rapeseed oil, almond oil, jojoba oil, orange oil, wheatgerm oil, peach kernel oil and the liquid components of coconut oil), branched primary alcohols, substituted cyclohexanes, linear and branched C₆-C₂₂ fatty alcohol carbonates, Guerbet carbonates, esters of benzoic acid with linear and/or branched C₆-C₂₂alcohols (e.g. Finsolv® TN), linear or branched, symmetric or asymmetric dialkyl ethers having a total of from 12 to 36 carbon atoms, especially from 12 to 24 carbon atoms, for example di-n-octyl ether, di-n-decyl ether, di-n-nonyl ether, di-n-undecyl ether, di-n-dodecyl ether, n-hexyl n-octyl ether, n-octyl n-decyl ether, n-decyl n-undecyl ether, n-undecyl n-dodecyl ether, n-hexyl n-undecyl ether, di-tert-butyl ether, diisopentyl ether, di-3-ethyldecyl ether, tert-butyl n-octyl ether, isopentyl n-octyl ether and 2-methyl pentyl-n-octyl ether; ring-opening products of epoxidised fatty acid esters with polyols, silicone oils and/or aliphatic or naphthenic hydrocarbons. Also of importance are monoesters of fatty acids with alcohols having from 3 to 24 carbon atoms. That group of substances comprises the esterification products of fatty acids having from 8 to 24 carbon atoms, for example caproic acid, caprylic acid, 2-ethylhexanoic acid, capric acid, lauric acid, isotridecanoic acid, myristic acid, palmitic acid, palmitoleic acid, stearic acid, isostearic acid, oleic acid, elaidic acid, petroselinic acid, linoleic acid, linolenic acid, elaeostearic acid, arachidic acid, gadoleic acid, behenic acid and erucic acid and technical-grade mixtures thereof (obtained, for example, in the pressure removal of natural fats and oils, in the reduction of aldehydes from Roelen's oxosynthesis or in the dimerisation of unsaturated fatty acids) with alcohols, for example isopropyl alcohol, caproic alcohol, capryl alcohol, 2-ethylhexyl alcohol, capric alcohol, lauryl alcohol, isotridecyl alcohol, myristyl alcohol, cetyl alcohol, palmoleyl alcohol, stearyl alcohol, isostearyl alcohol, oleyl alcohol, elaidyl alcohol, petroselinyl alcohol, linoyl alcohol, linolenyl alcohol, elaeostearyl alcohol, arachidyl alcohol, gadoleyl alcohol, behenyl alcohol, erucyl alcohol and brassidyl alcohol and technical-grade mixtures thereof (obtained, for example, in the high-pressure hydrogenation of technical-grade methyl esters based on fats and oils or aldehydes from Roelen's oxosynthesis and as monomer fractions in the dimerisation of unsaturated fatty alcohols). Of special importance are isopropyl myristate, isononanoic acid C₁₆-C₁₈alkyl esters, stearic acid 2-ethylhexyl ester, cetyl oleate, glycerol tricaprylate, coconut fatty alcohol caprinate/caprylate and n-butyl stearate. Further oil components that can be used are dicarboxylic acid esters, such as di-n-butyl adipate, di(2-ethylhexyl) adipate, di(2-ethylhexyl) succinate and diisotridecyl acetate, and also diol esters, such as ethylene glycol dioleate, ethylene glycol diisotridecanoate, propylene glycol di(2-ethylhexanoate), propylene glycol diisostearate, propylene glycol dipelargonate, butanediol diisostearate and neopentyl glycol dicaprylate. Preferred mono- or poly-ols are ethanol, isopropanol, propylene glycol, hexylene glycol, glycerol and sorbitol. It is also possible to use di- and/or tri-valent metal salts ,(alkaline earth metal, Al³⁺ inter alia) of one or more alkylcarboxylic acids.

The oil components can be used in an amount of, for example, from 1 to 60 % by weight, especially from 5 to 50 % by weight and preferably from 10 to 35 % by weight, based on the total weight of the composition.

Any conventionally usable emulsifier can be used for the compositions.

As emulsifiers there come into consideration, for example, non-ionic surfactants from the following groups:
- addition products of from 2 to 30 mol of ethylene oxide and/or from 0 to 5 mol of propylene oxide with linear fatty alcohols having from 8 to 22 carbon atoms, with fatty acids having from 12 to 22 carbon atoms and with alkylphenols having from 8 to 15 carbon atoms in the alkyl group, for example ceteareth-20 or ceteareth-12;
- C₁₂-C₂₂ fatty acid mono- and di-esters of addition products of from 1 to 30 mol of ethylene oxide with polyols having from 3 to 6 carbon atoms, especially with glycerol;
- glycerol mono- and di-esters and sorbitan mono- and di-esters of saturated and unsaturated fatty acids having from 6 to 22 carbon atoms and ethylene oxide addition products thereof, for example glyceryl stearates, glyceryl isostearates, glyceryl oleates, sorbitan oleates or sorbitan sesquioleates;
- C₈-C₂₂alkyl-mono- and -oligo-glycosides and ethoxylated analogues thereof, degrees of oligomerisation of from 1.1 to 5, especially from 1.2 to 1.4, being preferred, and glucose being preferred as the sugar component;
- addition products of from 2 to 60 mol, especially from 15 to 60 mol, of ethylene oxide with castor oil and/or hydrogenated castor oil;
- polyol esters and especially polyglycerol esters, for example diisostearoyl polyglyceryl-3-diisostearates, polyglyceryl-3-diisostearates, triglyceryl diisostearates, polyglyceryl-2-sesquiisostearates or polyglyceryl dimerates. Mixtures of compounds from a plurality of those substance classes are also suitable;
- partial esters based on linear, branched, unsaturated or saturated C₆-C₂₂ fatty acids, ricinoleic acid and also 12-hydroxystearic acid and on glycerol, polyglycerol, pentaerythritol, dipentaerythritol, sugar alcohols (e.g. sorbitol), alkyl glucosides (e.g. methyl glucoside, butyl glucoside, lauryl glucoside) and also polyglucosides (e.g. cellulose), for example polyglyceryl-2-dihydroxystearates or polyglyceryl-2-diricinoleates;
- mono-, di- and tri-alkylphosphates and also mono-, di- and/or tri-PEG-alkylphosphates and salts thereof;
- wool wax alcohols;
- one or more ethoxylated esters of natural derivatives, for example polyethoxylated esters of hydrogenated castor oil;
- silicone oil emulsifiers, for example silicone polyol;
- polysiloxane/polyalkyl/polyether copolymers and corresponding derivatives, for example cetyl dimethicone copolyol;
- mixed esters of pentaerythritol, fatty acids, citric acid and fatty alcohol (see DE-A-1 165 574) and/or mixed esters of fatty acids having from 6 to 22 carbon atoms, methylglucose and polyols, preferably glycerol or polyglycerol, for example polyglyceryl-3-glucose distearates, polyglyceryl-3-glucose dioleates, methyl glucose dioleates or dicocoyl pentaerythryl distearyl citrates and also
- polyalkylene glycols.

The addition products of ethylene oxide and/or of propylene oxide with fatty alcohols, fatty acids, alkylphenols, glycerol mono- and di-esters and also sorbitan mono- and di-esters of fatty acids, or with castor oil, are known, commercially available products. They are usually homologue mixtures, the average degree of alkoxylation of which corresponds to the ratio of the amounts of ethylene oxide and/or propylene oxide and substrate with which the addition reaction is carried out. C₁₂-C₁₈ fatty acid mono- and di-esters of addition products of ethylene oxide with glycerol are known, for example, from DE-A-2 024 051 as fat-restoring substances for cosmetic preparations.

C₈-C₁₈Alkyl-mono- and -oligo-glycosides, their preparation and their use are known from the prior art. They are prepared especially by reacting glucose or oligosaccharides with primary alcohols having from 8 to 18 carbon atoms. Suitable glycoside radicals include mono-glycosides in which a cyclic sugar radical is glycosidically bonded to the fatty alcohol and also oligomeric glycosides having a degree of oligomerisation of up to preferably about 8. The degree of oligomerisation is a statistical average value based on a homologue distribution customary for such technical-grade products.

It is also possible to use zwitterionic surfactants as emulsifiers. The term "zwitterionic surfactants" denotes especially surface-active compounds that carry at least one quaternary ammonium group and at least one carboxylate and/or sulfonate group in the molecule. Zwitterionic surfactants that are especially suitable are the so-called betaines, such as N-alkyl-N,N-dimethylammonium glycinates, for example cocoalkyldimethylammonium glycinate, N-acylaminopropyl-N,N-dimethylammonium glycinates, for example cocoacylaminopropyldimethylammonium glycinate, and 2-alkyl-3-carboxymethyl-3-hydroxyethylimidazolines each having from 8 to 18 carbon atoms in the alkyl or acyl group and also cocoacylaminoethylhydroxyethylcarboxymethylglycinate. Special preference is given to the fatty acid amide derivative known by the CTFA name cocamidopropyl betaine. Likewise suitable as emulsifiers are ampholytic surfactants. Ampholytic surfactants are to be understood as meaning especially those which, in addition to containing a C₈-C₁₈-alkyl or -acyl group, contain at least one free amino group and at least one -COOH or -SO₃H group in the molecule and are capable of forming internal salts. Examples of suitable ampholytic surfactants include N-alkylglycines, N-alkylpropionic acids, N-alkylaminobutyric acids, N-alkyliminodipropionic acids, N-hydroxyethyl-N-alkylamidopropylglycines, N-alkyltaurines, N-alkylsarcosines, 2-alkylaminopropionic acids and alkylaminoacetic acids, each having approximately from 8 to 18 carbon atoms in the alkyl group.

The emulsifiers may be used in an amount of, for example, from 1 to 30 % by weight, especially from 4 to 20 % by weight and preferably from 5 to 10 % by weight, based on the total weight of the composition. It is, however, also possible in principle to dispense with the use of emulsifiers.

The repellent compositions according to the invention, for example creams, gels, lotions, alcoholic and aqueous/alcoholic solutions, emulsions, wax/fat compositions, stick preparations, powders or ointments, may in addition contain, as further adjuvants and additives, mild surfactants, super-fatting agents, pearlescent waxes, consistency regulators, thickeners, polymers, silicone compounds, fats, waxes, stabilisers, biogenic active ingredients, deodorising active ingredients, anti-dandruff agents, film formers, swelling agents, further UV light-protective factors, antioxidants, hydrotropic agents, preservatives, insect repellents, self-tanning agents, solubilisers, perfume oils, colourants, bacteria-inhibiting agents and the like.

Cosmetic repellent formulations according to the invention are contained in a wide variety of cosmetic preparations. There come into consideration, for example, especially the following preparations:
- skin-care preparations, e.g. skin emulsions, multi-emulsions or skin oils;
- light-protective preparations, such as sun milks, lotions, creams or oils, sunblocks or tropicals, pre-tanning preparations or after-sun preparations;
- skin-tanning preparations, e.g. self-tanning creams;
- depigmenting preparations, e.g. preparations for bleaching the skin or skin-lightening preparations;
- deodorants, such as deodorant sprays, pump-action sprays, deodorant gels, sticks or roll-ons;
- antiperspirants, e.g. antiperspirant sticks, creams or roll-ons;
- fragrance preparations, e.g. fragrances (eau de Cologne, eau de toilette, eau de parfum, parfum de toilette, perfume), perfume oils or perfume creams;

The final formulations listed may exist in a wide variety of presentation forms, for example:
- in the form of liquid preparations as a W/O, O/W, O/W/O, W/O/W or PIT emulsion and all kinds of microemulsions,
- in the form of a gel,
- in the form of an oil, a cream, milk or lotion,
- in the form of a powder, a lacquer, a tablet or make-up,
- in the form of a stick,
- in the form of a spray (spray with propellent gas or pump-action spray) or an aerosol,
- in the form of a foam, or
- in the form of a paste.

Preferably the cosmetic formulation is selected from the group consisting of aerosol, pump spray, liquid, cream, balm and stick.

Typically the substrate or carrier material contains the compound of formula (I), (II) or (III) in an amount of 0.005 % to 5 %, preferably in an amount from 0.1 to 3% based on the weight of the substrate or total carrier material.

In some cases it may be advantageous to use an additional repellent which is selected from the group consisting of aniseed oil, bergamot oil, camphor, cinnamon oil, clove oil, coconut oil, eucalyptus oil, geranium oil, laveder oil, lemon oil, nutmeg oil orange flower oil, pennyroyal oil, pine oil, pyrethrum, thyme oil, N, N-diethyl-m-toluamide (DEET), 1-piperidine-carboxylic acid 2-(2-hydroxyethyl)-1-methylester and butyl 3,4-dihydro-2,2-dimethyl-4-oxo-2H-pyran-6-carboxylate.

If an additional repellent is used it is preferably added in an amount from 0.005 to 5%, preferably in an amount from 0.1 to 3% based on the weight of the substrate or total carrier material.
The weight ratio between the repellent of formula (I), (II) or (III) and the additional repellant is preferably from 1:5 to 5: 1, more preferably from 1:2 to 2:1.

Around 3000 species of mosquitos are found worldwide; their habitat stretches from the northern tip of Finland to the southern tip of Africa. In the marshlands of Alaska and Finland and in the former Soviet Union, swarms of mosquitos actually blot out the sun and make life unbearable for men and animal.

Predominantly in the subtropics and tropics mosquitos also spread epidemics, such as for example malaria, yellow fever or leishmaniasis. Malaria is the best known and most prevalent disease; it is transmitted by the Anopheles mosquito.

Flies belong to the same order (Diptera) as mosquitos. Some species are dangerous because they contaminate food, others bite or suck human blood, causing painful wounds and transmitting diseases.

The Muscidae are a large family of flies typified by three species: The Common House-fly Musca domestica whose larva live in rotting matter and dung; the lesser house fly Fannia canicularis which tends to fly indoors. Both species do not bite and are more a problem of hygiene and a nuisance. This distinguishes them from the third species known as the common stable fly (Stomoxys calcitrans) or biting house fly.

Stable flies are not tied to livestock; they will also bite people. They remain on their hosts only while trying to feed, and travel widely in search of hosts or breeding sites.
Stable flies can transmit bacteria with their mouthparts causing f.e. tularaemia and anthrax. Like tabanids, they are wary feeders, and may bite several animals many times before feeding to completion.

No other biting flies than black flies (Simuliidae) cause such apprehension, as do black flies. In the Canadian forest in June and July, it is to be seen that this fear is justified. Black Flies of the Simulium venustum species complex can be so numerous and their attacks can be so unrelenting, that any outdoor activity during the day becomes almost impossible without protection.

Black flies often land and take off repeatedly without biting. Their number and their readiness to bite, increases as sunset approaches. However, even when they are not biting, their buzzing presence and constant crawling is as irritating as the bloodsucking itself. Relief comes after dark, for unlike mosquitos and biting midges (Culicoides sp), black flies do not attack at night.

Ticks (Arachnida, Acari) are a group of around 800 species worldwide. Sheep and deer ticks are the most important vectors of diseases, transmitting Lyme disease and tick-borne encephalitis as the most detrimental infections.

In North America and Europe the tick season lasts from May to November. In years with dry, hot weather the risk of infection is particularly high in May, June and September and less so in July and August.

Like mosquitos, ticks transmit diseases while sucking blood, which is necessary for their development. Unlike mosquitos, the tick usually needs several blood meals. To find a donor, it waits frequently for several weeks on blades of grass, ferns, bushes or on the undersides of leaves.

Tick-borne pathogens, which may be viruses or bacteria usually are transmitted with the saliva, or sometimes with the tick's excrement. Signs and symptoms of tick transmitted diseases in humans may take weeks or months to develop and are rather unspecific. This explains why it took until 1970 before a connection was established between Lyme Disease and the bites of deer ticks (Ixodes scapularis) and between summer encephalitis (FSME) and the bites of sheep ticks (Ixodes ricinus).

The compounds of formula (I), (II) or (III) may be used for example as repellent for insects of the order of Diptera or Arachnida, Acari.
The compounds of formula (I), (II) or (III) are in particular useful as repellents for the insects belonging to the genus Culicidae , Ceratopogonidae , Muscidae or Simullidae .

Preferably the compounds of formula (I), (II) or (III) are used as repellents for following insects or group of insects:
Aedes aegypti, Aedes taeniorhychus, Aedes albopictus, Culex quinquefasciatus, Culex pipiens fatigans, Anopheles stephensi, Anopheles sinensis, Anopheles dirus, Anophelles quadrimaculatus, Musca domestica, Stromoxys calcitrans, Simulium veustum, Tabanidae, Ixodes ricinus, Ixodes scapularis (damini), Ripicephalus sanguineus, Ceratopogonidae (Biting midges/No-seeums) or Culicoides spp.

In particular the compounds of formula (I), (II) or (III) are used as repellents for Aedes aegypti, Aedes taeniorhychus, Aedes albopictus, Culex quinquefasciatus, Culex pipiens fatigans, Anopheles stephensi, Anopheles sinensis, Anopheles dirus, Anophelles quadrimaculatus.

A further aspect of the invention is a process for the manufacture of an insect repellent substrate or surface comprising
a) incorporating in a substrate a compound of formula (I), (II) or (III) or
b) incorporating into a carrier material a compound of formula (I), (II) or (III) and applying the carrier material to a substrate or surface.

The definitions and preferences given above apply also to this further aspect of the invention.

The following examples illustrate the invention.

### A) Incorporation of 2,4,4'-trichloro-2'-hydroxydiphenylether into Polymers

2,4,4'-trichloro-2'-hydroxydiphenylether is incorporated into a polyethylene of the type PE-LLD (LE 8001, Borealis). The incorporation is effected by mixing 3% by weight of a master batch, containing 15% of the active substance with the PE-LLD. The mixture is homogenized for 2 minutes in a mechanical agitator (Henschel) and contains finally 0.45% active substance.

The mixture is then compounded to a granulate material in a single screw extruder (Göpfert) at 80 rpm and at a maximum temperature of 230°C under nitrogen atmosphere.

The granulate material is blow molded into films.

### A1) Insect Repellent Test

### Test 1:

In a box of 30x30x30 cm, with side walls formed by a mosquito net a part of the net is covered from the outside by the polymer film prepared as outlined above.
The uncovered net area (net area A) has 2475 cm² and the covered net area (net area B) has 2025 cm².

One film used to cover a part of the net contains 0.45% 2,4,4'-Trichloro-2'-hydroxydiphenylether and the second film contains no active substance.
The box is filled with mosquitos (Aedes aegypti) and at a certain point of time the number of mosquitos sitting on the net area A (without film) and net area B (with film) is counted.

| Reference film (1) without 2,4,4'-trichloro-2'-hydroxydiphenylether : | |
|---|---|
| Net area A (without film) | 1 mosquito / 34.4 cm² |
| Net area B (with film) | 1 mosquito / 49.4 cm² |

| Film (2) containing 2,4,4'-Trichloro-2'-hydroxydiphenylether: | |
|---|---|
| Net area A (without film) | first run: 74 |
| | second run: 60 average: 70.3 |
| | third run: 77 |
| **corresponds to 1 Moskito / 35.2 cm**^{**2**} | |
| | |
| Net area B (with film) | first run: 24 |
| | second run: 38 average: 28.3 |
| | third run: 32 |
| **corresponds to 1 Moskito / 71.5 cm**^{**2**} | |

The results indicate:
a) The mosquitos prefer the free net area as compared to the covered net area (see film 1).
b) The number of mosquitos on the free net area is in both cases apprximately the same(film 1 and film 2).
c) There is a marked difference between the covered net areas. The covered area having incorporated into the film 2,4,4'-trichloro-2'-hydroxydiphenylether (film 2) shows a mosquito density of 1 mosquito / 71.5 cm² whereas the reference film (1) shows 1 mosquito / 49.4 cm²).

### Test 2:

2 equal cubic wire frames are covered with film (1) and film (2) and are placed into a standard box of 30x30x30 cm, with side walls formed by a mosquito net. The box is filled with approximately 100 mosquitos (Aedes aegypti, male and female).
After 2 minutes the number of mosquitos which land in a time interval of 4 minutes on the respective film is counted.

| | |
|---|---|
| Film (1) without 2,4,4'-trichloro-2'-hydroxydiphenylether: | **34 landing mosquitos** |
| | |
| Film (2) with 0.45% 2,4,4'-trichloro-2'-hydroxydiphenylether : | **2 landing mosquitos** |

This test clearly demonstrates that the film containing 2,4,4'-trichloro-2'-hydroxydiphenylether is significantly less frequented than the reference film.

### B) Incorporation of 2,4,4'-trichloro-2'-hydroxydiphenylether into a cosmetic formulation

The following repellent formulations are used for the repellent test:

### Formulation (A)

0.3 % bw. of 2,4,4'-trichloro-2'-hydroxydiphenylether dissolved in 60% ethanol

| Formulation (B) | | |
|---|---|---|
| | | % b.w. |
| Part A | 2,4,4'-trichloro-2'-hydroxydiphenylether | 4.0 |
| | PEG-5 glyceryl stearate | |
| | cetylalcohol | 2.00 |
| | mineral oil | 2.00 |
| | isopropyl myristate | 2.00 |
| Part B | propylene glycol | 2.00 |
| | glycerin | 1.50 |
| | methylparaben | 0.18 |
| | propylparaben | 0.02 |
| | water | Qs to 100 |

Testing method: The tests are carried out according to a well-known test method of the Swiss tropic institute.

About 300-400 female yellow fever mosquitoes (Aedes aegypti) in a breed cage of 30 x 30 x 30 cm serve as experimental animals. In order to be sure that all mosquito females are hungry during the test phase the mosquitoes nutrient (sugar water) was displaced in the evening before the test day.

Approx. 500 cm² of the lower arm of the two test persons are treated with 1 ml of the formulations (A) and (B) respectively. The untreated lower arm surface is sealed against the elbow with a mosquito-close plastic seal.

The untreated hand is protected with a thick, air-permeable wool glove, which simultaneously serves as control for the stitch activity of the mosquitoes.

The treated surfaces remain unaffected during the test period.

For the test the lower arm and the hand are exposed into the mosquito cage once per hour. During a period of 10 minutes the number of the mosquitoes are noted, which
a) try to stitch thru the glove (positive control)
b) approach the treated surface more than 3 cm (at the beginning, test center, at the end),
c) remain sitting on the treated surface longer than 2 seconds and
d) stitch into the treated and sucked blood.

### Note:

Parameters a) and b) are estimated values, since an accurate determination is not possible.

The results show that the formulations (A) and (B) show a repellent activity.

## Claims

1. Use of a compound according to formula I, II or III as repellent for insects 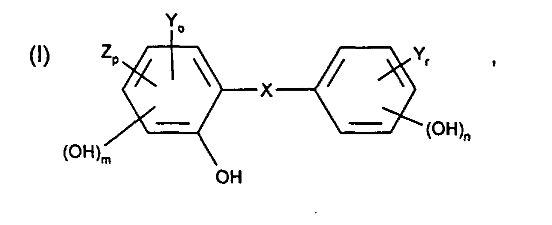 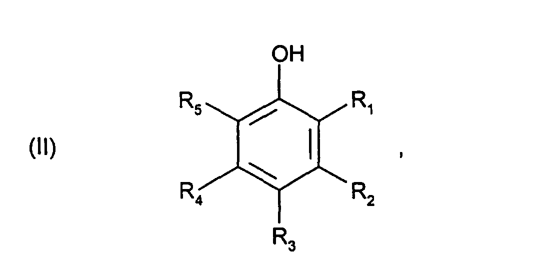 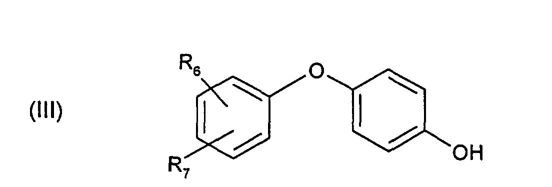 wherein
X is oxygen, sulfur or -CH₂-,
Y is chloro or bromo,
Z is SO₂H NO₂ or C₁-C₄-Alkyl,
r is 0 to 3,
o is 0 to 3,
p is 0 or 1,
m is 0 or 1 and
n is 0 or 1;
and at least one of r or o is # 0;
R₁ is hydrogen, hydroxy, C₁-C₄alkyl, chloro, nitro, phenyl or benzyl,
R₂ is hydrogen, hydroxy, C₁-C₆alkyl or halogen,
R₃ is hydrogen, C₁-C₆alkyl, C(O)O-C₁-C₁₈alkyl, hydroxy, chloro, nitro or a sulfo group in the form of the alkali metal salts or ammonium salts thereof,
R₄ is hydrogen or methyl,
R₅ is hydrogen or nitro and
R₆ and R₇ are indpendently C₁-C₁₈alkyl.

2. Use of a compound according to claim 1 wherein the compound of formula (I), (II) or (III) is
a) 2,4,4'-Trichloro-2'-hydroxydiphenyl ether,
b) 4,4'-Dichloro-2'-hydroxydiphenyl ether,
c) p-hydroxy-benzoicacid-(C₁-C₈)alkylester
d) 2,2'-methylene-bis(4-chlorophenol) or
e) 4-(2-t-butyl-5-methylphenoxyl)-phenol.

3. Use of a compound according to claim 2 wherein the compound is
a) 2,4,4'-Trichloro-2'-hydroxydiphenyl ether.

4. Use according to claim 1 wherein the compounds of formula (I), (II) or (III) are incorporated
a) into a substrate or
b) into a carrier material, which is applied to a substrate or surface
protecting the substrate or surface from attack by insects.

5. Use according to claim 4 wherein the substrate is a natural or synthetic polymer and the carrier is a cosmetic formulation, a formulation for textile finishing, dyeing or printing or a detergent or rinse.

6. Use according claim 5 wherein the cosmetic formulation is selected from the group consisting of aerosol, pump spray, liquid, cream, balm and stick.

7. Use according to claim 4 wherein the natural polymer is cotton, wool or silk and the synthetic polymer is a thermoplastic polymer, a thermosetting coating or a thermoplastic coating.

8. Use according to claim 7 wherein the termoplastic polymer is a polyolefin, a polyester, a polyamide, a polyacrylate or a polyurethane.

9. Use according to claim 4 wherein the natural or synthetic polymer is in the form of a molded article, film, fiber or fabric.

10. Use according to claim 4 wherein the substrate or carrier material contains the compound of formula (I), (II) or (III) in an amount of 0.005 % to 5 % based on the weight of the substrate or total carrier material.

11. Use according to claim 1 wherein an additional repellent is present which is selected from the group consisting of aniseed oil, bergamot oil, camphor, cinnamon oil, clove oil, coconut oil, eucalyptus oil, geranium oil, laveder oil, lemon oil, nutmeg oil orange flower oil, pennyroyal oil, pine oil, pyrethrum, thyme oil, N, N-diethyl-m-toluamide (DEET), 1-piperidine-carboxylic acid 2-(2-hydroxyethyl)-1-methylester and butyl 3,4-dihydro-2,2-dimethyl-4-oxo-2H-pyran-6-carboxylate.

12. Use according to claim 1 wherein the insects are of the order of Diptera or Arachnida, Acari.

13. Use according to claim 12 wherein the insects belong to the genus Culicidae , Ceratopogonidae , Muscidae or Simullidae.

14. Use according to claim 12 wherein the insects are
Aedes aegypti, Aedes taeniorhychus, Aedes albopictus, Culex quinquefasciatus, Culex pipiens fatigans, Anopheles stephensi, Anopheles sinensis, Anopheles dirus, Anophelles quadrimaculatus, Musca domestica, Stromoxys calcitrans, Simulium veustum, Tabanidae, Ixodes ricinus, Ixodes scapularis (damini), Ripicephalus sanguineus, Ceratopogonidae (Biting midges/No-seeums) or Culicoides spp.

15. Use according to claim 14 wherein the insects are
Aedes aegypti, Aedes taeniorhychus, Aedes albopictus, Culex quinquefasciatus, Culex pipiens fatigans, Anopheles stephensi, Anopheles sinensis, Anopheles dirus Anophelles quadrimaculatus.

16. A process for the manufacture of an insect repellent substrate or surface comprising
a) incorporating in a substrate a compound of formula (I), (II) or (III) according to claim 1 or
b) incorporating into a carrier material a compound of formula (I), (II) or (III) according to claim 1 and applying the carrier material to a substrate or surface.
